**Europäisches Patentamt**

**European Patent Office**

**Office européen des brevets**

(19)

(11) Publication number: **0 376 334 B1**

(12) # EUROPEAN PATENT SPECIFICATION

(45) Date of publication of patent specification: **21.04.93**

(51) Int. Cl.5: **C04B 28/02**, C04B 40/00, //(C04B28/02,14:04,14:06,16:06, 22:12),(C04B28/02,14:04,14:06, 14:38,22:12)

(21) Application number: **89124110.1**

(22) Date of filing: **28.12.89**

(54) **Non-asbestos inorganic hardened compositions and production method thereof.**

(30) Priority: **28.12.88 JP 328936/88**
**08.12.89 JP 317735/89**

(43) Date of publication of application:
**04.07.90 Bulletin 90/27**

(45) Publication of the grant of the patent:
**21.04.93 Bulletin 93/16**

(84) Designated Contracting States:
**BE CH DE ES FR GB IT LI**

(56) References cited:
**EP-A- 0 067 456**
**EP-A- 0 068 742**
**GB-A- 1 023 141**
**GB-A- 2 142 619**
**US-A- 4 377 415**

**CHEMICAL ABSTRACTS, vol. 107, no. 4, 27 July 1987 Columbus, Ohio, USA & JP-A-6241785 (MATSUSHITA ELECTRIC WORKS LTD) 23-02-1987 page 267; ref. no. 27578J**

(73) Proprietor: **ASK CORPORATION**
**5-5, Tsurumichuo 2-chome Tsurumi-ku**
**Yokohama-shi Kanagawa-ken(JP)**

(72) Inventor: **Morohashi, Kenji**
**13-1, Tokodai 4-chome**
**Ishioka-shi Ibaragi-ken(JP)**
Inventor: **Ito, Toshiaki**
**5-5-11, Minamikoshigaya**
**Koshigaya-shi, Saitama-ken(JP)**
Inventor: **Taguchi, Kazuto**
**13-2, Tokodai 4-chome**
**Ishioka-shi Ibaragi-ken(JP)**
Inventor: **Yonekura, Toshihiro**
**31-21, Oharadai**
**Yokosuka-shi Kanagawa-ken(JP)**
Inventor: **Kusunoki, Kokyo**
**596-172, Ushiku**
**Ushikucho Ushiku-shi Ibaragi-ken(JP)**
Inventor: **Akimoto, Yukio**
**15-1, Ichikawa 2-chome**
**Ichikawa-shi Chiba-ken(JP)**

**CHEMICAL ABSTRACTS, vol. 97, no. 4, 26 July 1982 Columbus, Ohio, USA & JP-A-8227955 (MATSUSHITA ELECTRIC WORKS LTD) 15-02-1982 page 257; ref. no. 27768W**

74 Representative: **Strehl, Schübel-Hopf, Groening Maximilianstrasse 54 Postfach 22 14 55 W-8000 München 22 (DE)**

## Description

Field of the Invention

This invention relates to a non-asbestos inorganic hardened composition for use in roofing materials, exterior wall materials, and the like, and a method for producing the same.

Background of the Invention

Heretofore, cementitious hardened compositions used in roofing materials, exterior wall materials and the like have been based on, for example, cement, aggregates (sand, calcium carbonate powder, slag, and the like), asbestos, pulp, and other materials, and produced by a method such as sheeting, semi-dry molding, or extrusion molding. Strength, heat resistance, and weatherability of the thus obtained hardened compositions have been largely attributed to asbestos. In addition, if asbestos is not used, production has been impossible or very difficult.

Recently, adverse effects of asbestos on health have become announced, and use of non-asbestos architectural materials has been in demand. However, elimination of asbestos from the composition of the cementitious hardened compositions inevitably results in a deterioration of properties which poses problems in using the compositions in roofing materials, exterior wall materials and the like. There have been recently disclosed several techniques on non-asbestos architectural materials in Japan, and in overseas which are leading in the use of non-asbestos architectural materials, but evaluation of these techniques has not been established in the market as yet.

An example of the prior art non-asbestos hardened composition is disclosed in Japanese Patent Publication No. 60-59182/1985. This prior art technology is characterized in that a combination of ultra-fine silica fume and a high water reducing agent is used without the need for a thickener (in some cases, a minute amount of a thickener is required) to develop plasticity and viscosity of the raw materials, and the mixture is extrusion molded or roll pressed to yield a hardened composition. In this case, water content is very much smaller than that in ordinary cases, which is considered to reduce adherence of the composition to the roll.

However, this method is defective in that, since the silica fume comprises ultra-fine, amorphous silica, it readily undergoes a reaction with the calcium component of the cement, and a hydration reaction takes place in a short time.

This results in considerable changes in viscosity of the raw materials and, by a shearing force applied during wet mixing or extrusion molding, the temperature of the raw materials tends to increase which, in turn, accelerates hardening. This causes hardening to begin during the production process, increasing load to the roll press or making it difficult to provide deep patterns on the surface.

Furthermore, during the production process, chips of green sheet are generally fed back to the raw materials for reuse. In this case, if a material in the course of hardening is mixed, the load to the roll press will be increased even further, or an uneven surface (with foreign material marks) will result.

Thus, the prior art technology has a problem of extremely short pot life from extrusion to the completion of molding.

Furthermore, the thus obtained molding has a very dense, hard texture, which does not pass the non-flammability tests of Japan (JIS A1321: described later in detail), and undergoes generation of fine cracks by outdoor exposure.

On the other hand, the prior art extrusion molding methods to obtain a hardened composition are broadly classified into: (1) extrusion molding alone, (2) extrusion process followed by roll pressing process, and (3) extrusion process followed by flat pressing process. However, thin-plate-formed hardened compositions or hardened compositions with complex patterns cannot be precisely formed by these prior art methods.

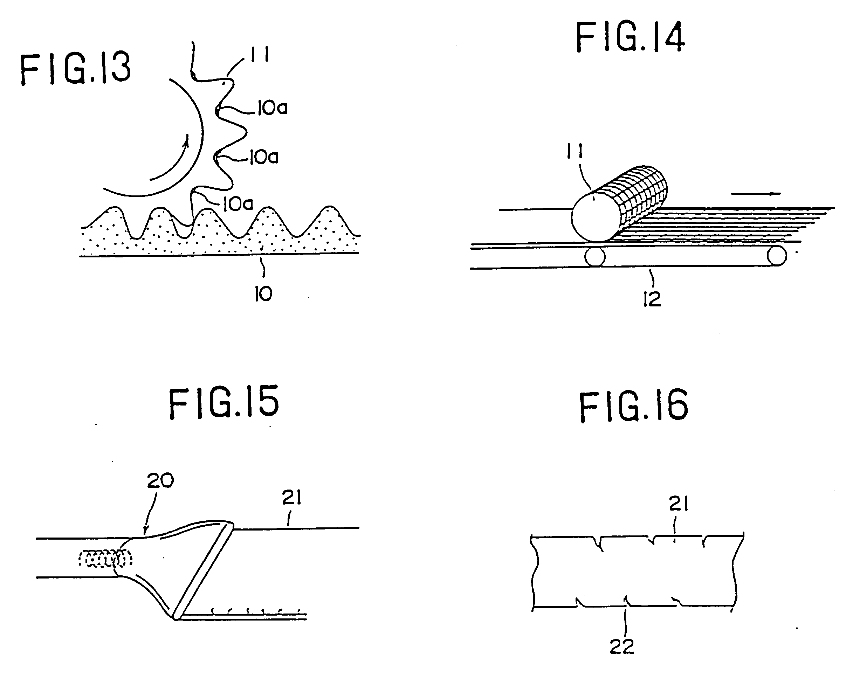

For example, as shown in Fig.13 and Fig.14, the above (2) extrusion followed by roll pressing process tends to have problems of mis-registration or deformation of patterns due to elongation of the raw material during compression by a roll 11, or adhesion of a raw material 10a to the roll 11 (Fig.13). This method also tends to have problems of elongation or shrinkage of a raw material 10 or slipping of patterns due to mis-synchronization of the roll 11 with a conveyer belt 12.

In the (3) extrusion followed by flat pressing process, for example, as shown in Fig.15 and Fig.16, extrusion speed over the cross direction of a raw material sheet 21 extruded from a die 20 tends to be faster at the central part and become slower towards the sides, which may result in a crack 22 in part of the side of the resulting sheet 21, making it difficult to produce a wide, thin hardened composition.

Summary of the Invention

With a view to eliminate the above prior art problems, it is a primary object of the present invention to provide a non-asbestos inorganic hardened composition, which uses no asbestos, is easy to produce, and has improved properties such as durability, and a method for production of the same.

In accordance with the present invention which attains the above object, there is provided a first non-asbestos inorganic hardened composition comprising a mixture of 100 parts by weight of cement, 5 to 60 parts by weight of quartzite powder, 5 to 60 parts by weight of wollastonite, and 0.1 to 10 parts by weight of fiber mixed with an appropriate amount of water, molded, and hardened. There is also provided according to the present invention a second non-asbestos inorganic hardened composition comprising a mixture of 100 parts by weight of cement, 5 to 60 parts by weight of quartzite powder, 5 to 60 parts by weight of wollastonite, 0.1 to 10 parts by weight of fiber, and 0.2 to 8 parts by weight of an alkali metal chloride or an alkaline earth metal chloride mixed with an appropriate amount of water, molded, and hardened. There is further provided according to the present invention a third non-asbestos inorganic hardened composition based on the above first or second non-asbestos inorganic hardened composition, further comprising 0.1 to 6 parts by weight of a water reducing agent and 0.1 to 4 parts by weight of a thickener.

There is also provided according to the present invention a first method for producing a non-asbestos inorganic hardened composition comprising adding an appropriate amount of water to a composition comprising a mixture of 100 parts by weight of cement, 5 to 60 parts by weight of quartzite powder, 5 to 60 parts by weight of wollastonite, 0.1 to 10 parts by weight of fiber, 0.1 to 6 parts by weight of a high water reducing agent, and 0.1 to 4 parts by weight of a thickener and subjecting the mixture to an extrusion process, a roll pressing process, and a flat pressing process followed by hardening and curing.

There is further provided according to the present invention a second method for producing a non-asbestos inorganic hardened composition comprising adding an appropriate amount of water to a composition comprising a mixture of 100 parts by weight of cement, 5 to 60 parts by weight of quartzite powder, 5 to 60 parts by weight of wollastonite, 0.1 to 10 parts by weight of fiber, 0.2 to 8 parts by weight of an alkali metal chloride or an alkaline earth metal chloride, 0.1 to 6 parts by weight of a high water reducing agent, and 0.1 to 4 parts by weight of a thickener and subjecting the mixture to an extrusion process, a roll pressing process, and a flat pressing process followed by hardening and curing.

Brief Description of the Drawings

These and other objects as well as advantages of the present invention will become clear by the following description of a preferred embodiment of the present invention with reference to the accompanying drawings.

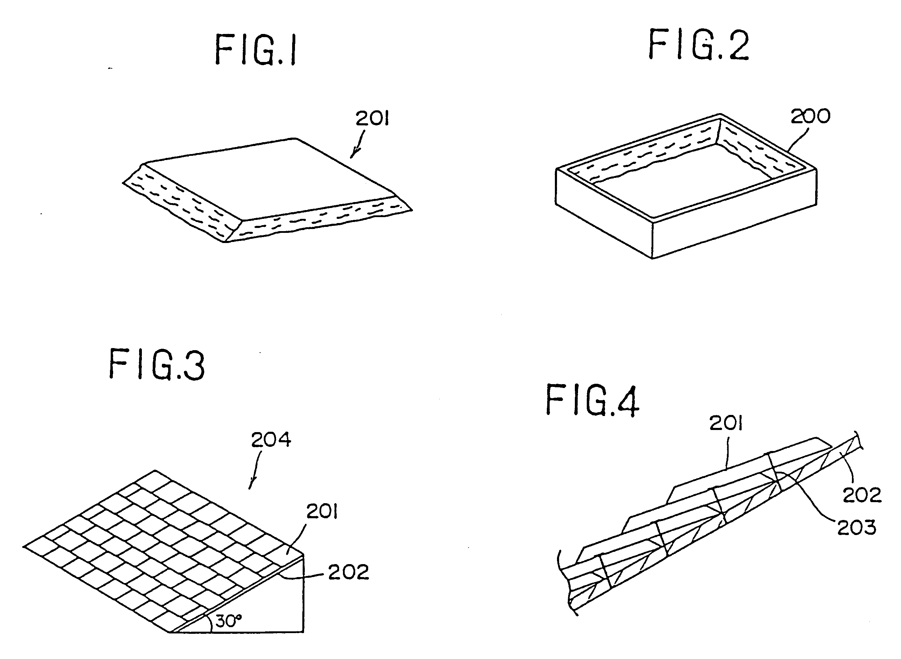

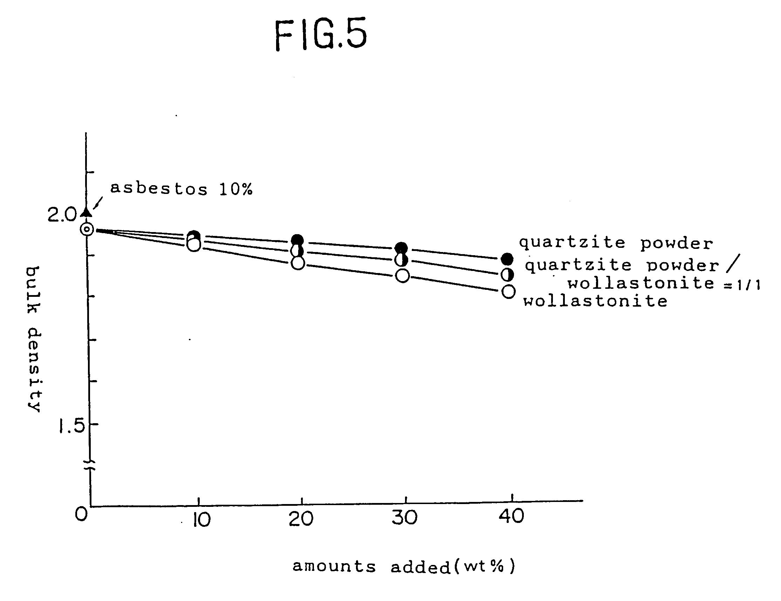

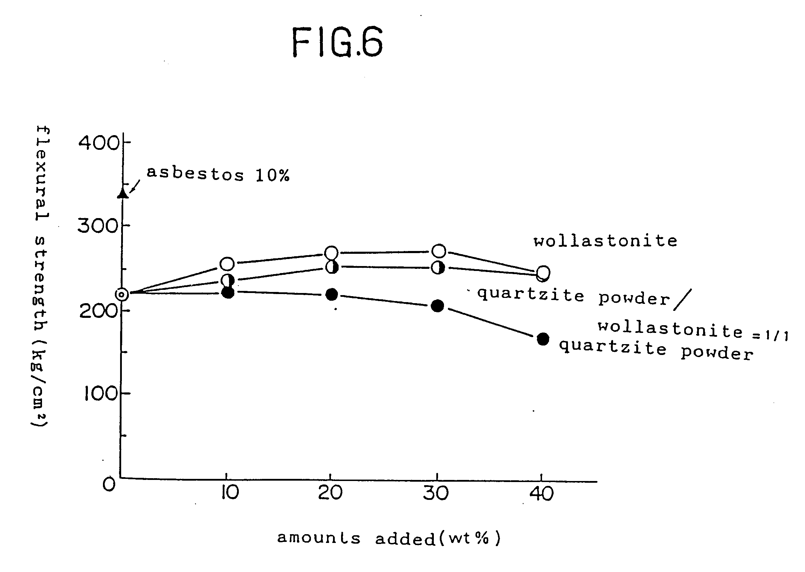

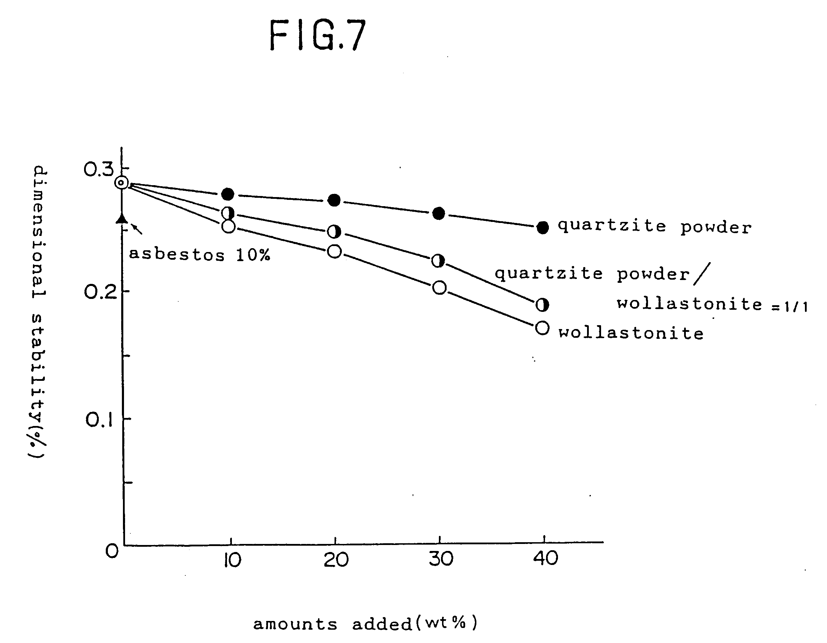

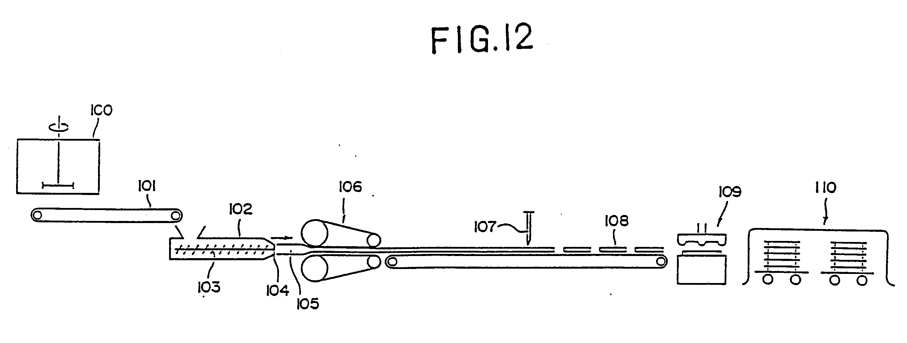

Fig.1 is a schematic oblique view showing an embodiment of the non-asbestos hardened composition of the present invention. Fig.2 is a schematic oblique view showing a mold used for production of the hardened composition. Figs.3 and 4 are schematic views showing test methods. Figs.5 to 11 are graphs showing test results of Test Examples. Fig.12 is a schematic view showing the production method according to the present invention. Figs. 13 to 16 are schematic views showing the prior art.

Detailed Description of the Invention

The cement used in the present invention can be selected from conventional types of cement known in the art such as ordinary, rapid-setting, ultra-rapid-setting, and white types of Portland cement.

The quartzite powder used in the present invention is preferably a crystalline quartzite powder, more preferably a coarse powder having a Blaine specific surface area of 20,000 $cm^2/g$ or less. If an amorphous quartzite powder or an excessively fine quartzite powder is used, it reacts as pozzolan with the calcium component of the cement during the production process to yield calcium silicate gel, which shortens the pot life of raw materials and tends to cause production troubles.

Furthermore, this deteriorates the heat resistance of the hardened composition and, in some cases, the hardened composition may burst during the non-flammability tests.

The quartzite powder is added preferably in an amount of 5 to 60 parts by weight, more preferably in an amount of 10 to 40 parts by weight, to 100 parts by weight of the cement. If the amount is less than 5 parts by weight, sufficient properties will not be developed, and use of more than 60 parts by weight will cause a decrease in strength, thus both cases are not preferable.

Wollastonite used in the present invention is not restricted to a specific type, but known natural products can be used. It is preferable to use wollastonite in an amount of 5 to 60 parts by weight to 100 parts by weight of cement. If the amount is less than 5 parts by weight, sufficient properties will not be developed, and use of more than 60 parts by weight will result in a dried-up state of the mixture, which affects the moldability of the composition. Thus, both cases are not preferable.

The use of the quartzite powder and wollastonite in combination with cement, as shown in Test Examples described later, can improve the dimensional stability and shrinkage by heating for conventional cases using asbestos.

Use of an excessive amount of wollastonite may result in, for example, deterioration of production stability, such as reduced consistency of the green sheet. In the present invention, as described above, by using quartzite powder in combination with wollastonite, advantageous properties obtainable with large amounts of wollastonite can be developed with a relatively small amount of wollastonite.

Furthermore, in the present invention, as described above, by the addition of the alkali metal chloride or the alkaline earth metal chloride to the mixture of wollastonite and quartzite powder, equal or superior properties (especially, heat shrinkage resistance) obtainable with large amounts of wollastonite can be developed with a relatively small amount of wollastonite.

The alkali metal chloride or the alkaline earth metal chloride can be, for example, potassium chloride, sodium chloride, calcium chloride, or barium chloride. The alkali metal chloride or the alkaline earth metal chloride is preferably used in an amount of 0.2 to 8 parts by weight to 100 parts by weight of cement, 5 to 60 parts by weight of quartzite powder, and 5 to 30 parts by weight of wollastonite, and it is particularly preferable to use in an mount of 1 to 4 parts by weight. This is because if the amount is less than 0.2 parts by weight, development of advantageous properties is insufficient and, if the amount exceeds 8 parts by weight, no further improvement in effect is expectable.

The alkali metal chloride or the alkaline earth metal chloride can be added by a conventional method known in the art, for example, by dissolving in water for processing.

The addition of the above chloride does not pose any problems in the production of the compositions in terms of extrudability and moldability.

The high water reducing agent used in the present invention is a surface active agent which improves wettability and flow properties of the above system comprising cement, quartzite powder, and water. The high water reducing agent includes a naphthalene-based type, a melamine-based type, and a polycarboxylic acid-based type.

It is preferable to use the high water reducing agent in an amount of 0.1 to 6 parts by weight with respect to 100 parts by weight of cement.

Preferable types of the thickener used in combination with the high water reducing agent in the compositions of the present invention include cellulose-based types such as ethylhydroxyethyl cellulose, hydroxypropylmethyl cellulose, and hydroxyethylmethyl cellulose.

The use of a combination of the high water reducing agent and the thickener, as shown in Test Examples described later, can provide good extrusion properties and prevent adherence to the roll or mold. Specifically, addition of the high water reducing agent can reduce the amount of water required for kneading of the materials to a minimum, and addition of a small amount of the thickener, which confers the materials with a required minimum plasticity for molding, can give a coaction effect with the high water reducing agent to obtain a mixture having reduced stickiness and good plasticity.

Furthermore, the use of the high water reducing agent in combination with the thickener reduces the water ratio and enables production of a relatively dense hardened composition having improved freezing resistance even with the use of a simple-structured extrusion molding machine which has no vacuum degassing mechanism.

In the present invention, to improve the properties of the hardened composition even further, fiber and aggregate may be added as needed to the powders of the above raw materials.

Fiber is added to improve strength and impact resistance as did asbestos in the prior art compositions. The fiber includes synthetic fibers such as P.V.A., P.P., rayon, P.E., and acrylics, cellulosic fibers, carbon fibers, and glass fibers. However, fiber types are not restricted to the above, but one which can improve strength and impact resistance of the cementitious material may be used.

Aggregate is added to adjust, for example, specific gravity, Young's modulus, and processability of the composition. Types of the aggregate include, but are not restricted to, conventional materials known in the art such as perlite, "shirasu" baloon, wood dust, and lime powder, which are added in amounts as needed.

In the method for producing a non-asbestos inorganic hardened composition of the present invention, for example, as shown in Fig.12, the above raw materials in a desired ratio are blended in a mixer 100, and the mixture is fed through a conveyer belt 101 to an extrusion molding machine 102 where it is kneaded by a screw 103 in the extrusion molding machine 102 and discharged as a green sheet 105 from a die 104 (preforming). The thus extruded green sheet 105 is then passed through a roll pressing machine 106 to be pressed down to a predetermined thickness, and cut by a green sheet cutter 107 to a predetermined length. The thus cut green sheets 108 are conveyed by the conveyer belt 101 downstream, individually pressed by a flat pressing machine 109 into patterned sheets or complex shapes (final forming), and then transported to a curing chamber 110, where they are cured for a predetermined period of time to yield hardened compositions.

The method of the present invention comprising the extrusion process, roll pressing process, and flat pressing process enables efficient production of even thin or complex-shaped products over the prior art methods.

Thus, the composition is preformed in the extrusion process, formed in the roll pressing process into a thin sheet or a near-final shape, and finally patterned and shaped in the flat pressing process, smoothly and efficiently throughout the whole processes.

Test Examples

Test Examples showing effects of the present invention will be described with reference to the drawings.

Test Example 1

100 parts by weight of cement was mixed with varied amounts of quartzite powder, or wollastonite, or a 1:1 mixture of quartzite powder and wollastonite to obtain hardened compositions, which were measured for bulk density, flexural strength, dimensional stability, and heat shrinkage.

Materials used:

| | |
|---|---|
| Cement: | ordinary Portland cement (by Onoda Cement), (Blaine specific surface area: 3,300 $cm^2$/g) |
| Quartzite powder: | pulverized quartzite (by Chichibu Kogyo), (Blaine specific surface area: 3,800 $cm^2$/g) |
| Wollastonite: | (brandname: NYAD-G, made in U.S.A.) |
| Fiber: | (brandname: Vinylon RM182, by Kuraray) |
| Asbestos: | (chrysotile asbestos, Class 6) |

Molding Conditions:

| | |
|---|---|
| Molding size: | 150 mm (L) x 80 mm (W) x 8 mm (T) |
| Pressure: | molded at a pressure of 100 kg/$cm^2$ |

Specified amounts of the raw materials and water were mixed in a ratio of 1:2, charged into a mold, and molded using a dehydration press to obtain a molding.

As a Comparative Example, 10% by weight of asbestos was added to obtain a molding which was tested under the same conditions.

Test results are shown in Fig.5 (relationship between bulk density and amounts added), Fig.6 (relationship between flexural strength and amounts added), Fig.7 (relationship between dimensional stability and amounts added), and Fig.8 (relationship between heat shrinkage (850°C, 2 hours) and amounts added).

As shown in Fig.5 to Fig.8, of properties obtainable with the use of asbestos, dimensional stability to water absorption and reduced heat shrinkage can be alternatively achieved by the addition of wollastonite.

However, the addition of wollastonite alone results in insufficient viscosity of the green sheet which is unstable during the production process. It was found that quartzite powder can be added in combination with wollastonite to reduce the content of wollastonite and achieve the same properties as the case with a large amount of wollastonite.

Test Example 2

Compounds in Test Example 1 were further mixed with 2 parts by weight of an alkali metal chloride (KCl), and hardened compositions were measured for heat shrinkage.

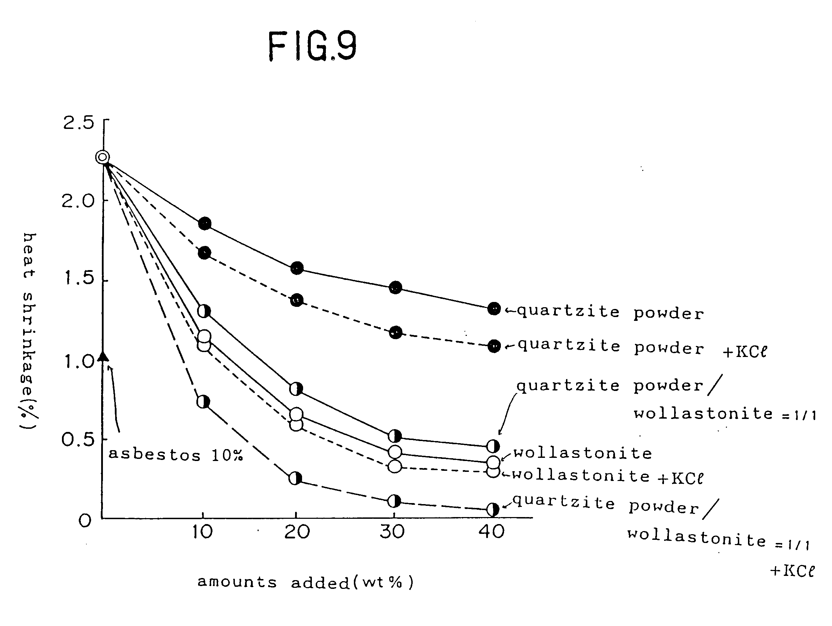

The results are shown in Fig.9.

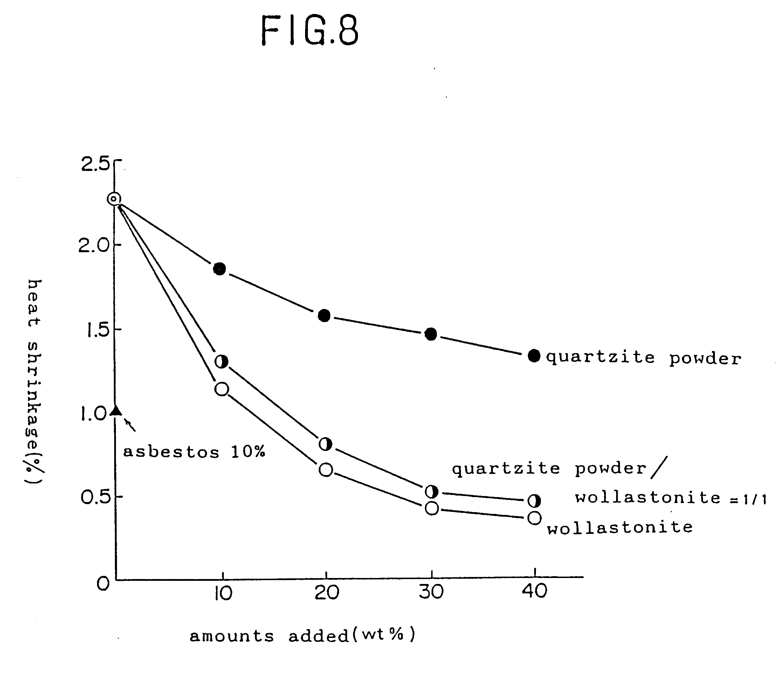

In Fig.9, plots for quartzite powder, quartzite powder/wollastonite = 1:1, and wollastonite are same as those in Test Example 1 shown in Fig.8.

Test Example 3

100 parts by weight of cement was mixed with a 1:1 mixture of quartzite powder, an alkali metal chloride (KCl), and an alkaline earth metal chloride (CaCl$_2$) to obtain hardened compositions, which were measured for heat shrinkage.

Materials used:

Quartzite powder:     pulverized quartzite (by Chichibu Kogyo), (Blaine specific surface area: 3,800 cm$^2$/g)

Wollastonite:     (brandname: NYAD-G, made in U.S.A.)

Alkali metal chloride:     (KCl, industrial reagent)

Alkaline earth metal chloride:     (CaCl$_2$, industrial reagent)

Mixing ratio:

| | |
|---|---|
| Cement: | 100 parts by weight |
| Quartzite powder: | 10 parts by weight |
| Wollastonite: | 10 parts by weight |
| Chloride: | 0.5, 1, 4, and 8 parts by weight (KCl, CaCl$_2$) |

Molding was made using the same procedure as in Test Example 1.

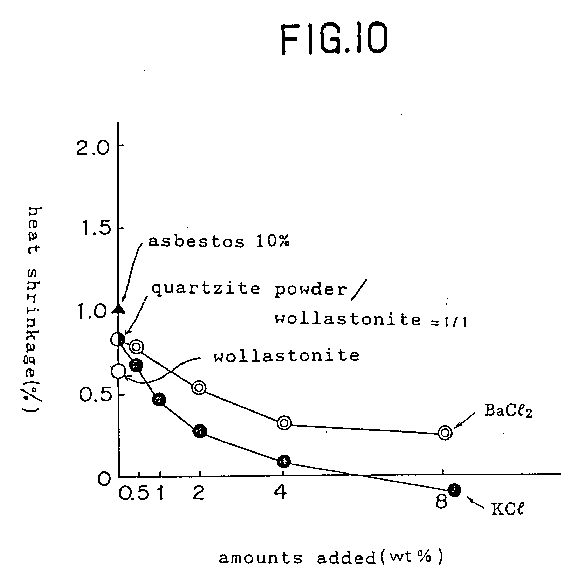

The results are shown in Fig.10. Since the test results with KCl and CaCl$_2$ are almost same, these are shown as chloride in Fig.10.

Test Example 4

As to the type of silica powder used, amorphous silica fume with a large specific surface area and crystalline quartzite powder were compared in terms of pot life of the green sheet.

Material:     pulverized quartzite (by Sumitomo Cement) (Blaine specific surface area: 11,600 cm$^2$/g) silica fume (by Japan Metals & Chemicals) (Blaine specific surface area: approx. 100,000 cm$^2$/g)

Mixing ratio:     Cement (80 parts by weight) + silica (20 parts by weight)

The two types of mixtures were respectively mixed with hot water (40°C) in a ratio of water/powder = 0.22, packed in closed containers and placed in a dryer at an atmospheric temperature of 40°C, and temperature at the center of the sample was measured over a period of about 9 hours.

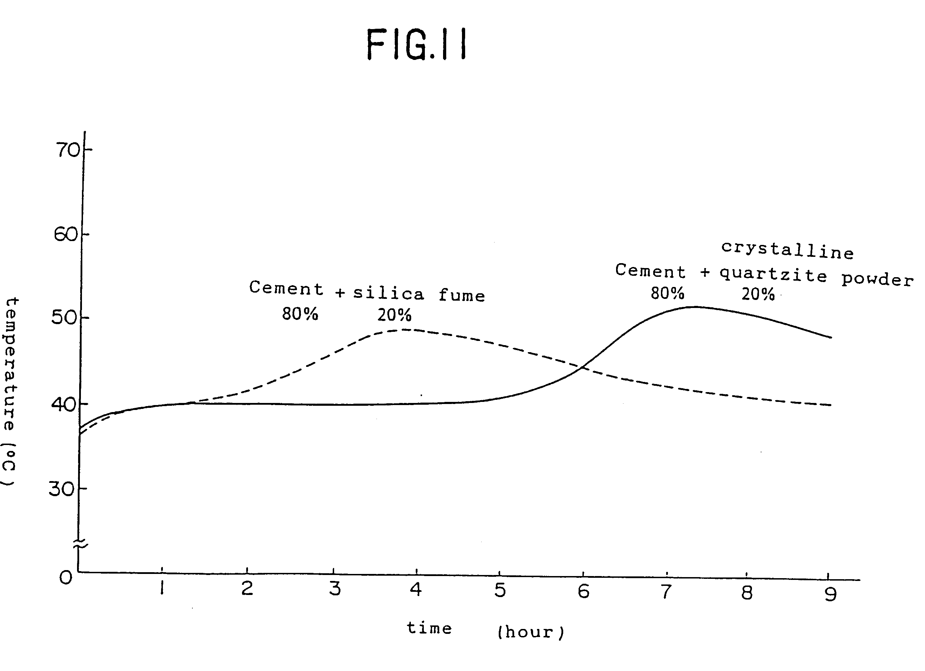

The test results are shown in Fig.11.

As shown in Fig.9, temperature of the silica fume-containing sample does not stay at the dryer atmospheric temperature but immediately begins to increase, reaching a maximal value after about 3-4 hours. This indicates that the hydration reaction advances very rapidly. This also indicates that the formulation tends to begin hardening during the production process (molding).

On the other hand, temperature of the crystalline silica-containing sample stays at 40°C for a long time. This indicates that the hydration reaction (hardening) does not take place during the molding process.

These results indicate that it is preferable to use a crystalline quartzite powder with a Blaine specific surface area of no greater than 20,000 cm$^2$/g, more preferably no greater than 10,000 cm$^2$/g, rather than very fine silica powder such as silica fume.

Embodiments

Preferred embodiments of the present invention will now be described in detail.

The following raw materials were used in ratios shown in Table 1 (Embodiments) and Table 2 (Comparative Examples) to prepare samples of the hardened composition and subjected to various measurements.

7

Raw materials used:

| | | |
|---|---|---|
| Cement: | ordinary Portland cement (by Onoda Cement, Blaine specific surface area: 3,300 cm$^2$/g) | |
| Quartzite powder: | pulverized quartzite (by Chichibu Kogyo, Blaine specific surface area: 3,800 cm$^2$/g) | |
| Silica fume: | (by Japan Metals & Chemicals, Blaine specific surface area: approx. 100,000 cm$^2$/g) | |
| Fly ash: | Joban Fly Ash (by Joban Karyoku Sangyo, Blaine specific surface area: 3,000 cm$^2$/g) | |
| Wollastonite: | (brandname: NYAD-G, made in U.S.A.) | |
| Alkali metal chloride: | KCl (industrial reagent) | |
| High water reducing agent: | (brandname: Mighty 150: by Kao, naphthalenesulfonate polycondensate) | |
| Thickener: | (brandname: Metholose 90SH-15000, by Shin-Etsu Chemical) | |
| Fiber: | Asbestos chrysotile asbestos Class 6 | |
| | P.P. (brandname: Toughlite, by Teikoku Sangyo) fiber length: 6 mm | |
| | P.V.A. (brandname: Vinylon RM182, by Kuraray) | |

Molding method:

Specific amounts of the powders and fiber are dry-mixed using a mixer (for about 3 minutes), then mixed with water and wet-mixed (for about 10 minutes). The mixture was extruded using an extrusion molding machine into 120 mm x 30 mm, and then roll-pressed using a roll press with a roll diameter of 40 cm into 250 mm x 9 mm. The sheet was then press molded using a flat press (100-ton press) at a pressure of 10 kg/cm$^2$ to obtain a molding with a thickness of 8 mm.

In this case, an FRP mold 200 shown in Fig.2 was attached to the press upper to produce a natural-slate-like (with inclined edges) molding 201 shown in Fig.1.

After molding, the resulting molding was subjected to steam curing (at 60°C for 24 hours), followed by secondary curing in a moist atmosphere at 20°C for 1 week. The molding was then completely dried at 105°C, and subjected to various tests.

The samples were tested using the following methods:

Flexural strength:

The sample was cut into 40 mm in width, 200 mm in length, and 8 mm in thickness, and tested on a Tensilon Type Universal Tester with a span of 150 mm and a load applied to a single line at the center.

Dimensional Change:

The sample was cut into 40 mm in width and 160 mm in length, immersed in water for 24 hours, and dried at 105°C for 24 hours. Shrinkages in the longitudinal direction were measured.

Non-flammability test:

According to JIS A1321 "Non-flammability Test Method for Architectural Interior Materials and Construction Method"
(1) Base material test: the sample (40 mm x 40 mm x 50 mm) is placed in a furnace at 750°C +/- 10°C, and the furnace temperature is checked that it is maintained at or below 810°C for 20 minutes.
(2) Surface test: the, surface of the sample is heated by a gas burner and an electric heater. The sample is then checked for significant deformations such as generation of cracks or warping. It is also checked that the exhaust temperature does not exceeds the standard curve by 50°C.

Accelerated weathering test:

As shown in Fig.3 and Fig.4, samples of moldings 201 of various formulations are nailed on the surface of a structural plywood placed with a slope of 30 degrees, so that about 2/3 portions of the moldings 201 are overlapped, to form a test structure 204.

Surfaces of the samples on the test structure were irradiated with an infrared lamp (so that the surface temperature is at 80°C) over a period of 9 hours. The samples were then showered with water for 15 hours. The above procedure constitutes a single cycle. The samples were subjected up to 30 cycles and the surface conditions of the individual samples were observed.

The test results are shown in Table 1 and Table 2.

As shown in Table 1, Test Examples 1 to 9 are almost comparable in properties to Comparative Example 1 shown in Table 2, which is a prior art hardened composition using asbestos, with improved moldability.

The invention may be embodied in other specific forms without departing from the spirit or essential characteristics thereof. The present embodiment is therefore to be considered in all respects as illustrative and not restrictive, the scope of the invention being indicated by the appended claims rather than by the foregoing description and all changes which come within the meaning and range of equivalency of the claims are therefore intended to be embraced therein.

Table 1

| | | | Constituent (part by weight) | | | | | | Moldability | | | Properties of hardened composition | | | | |
| | Fiber | Cement | Silica | Wollas-tonite | Chlo-ride *9 | Water | Thick-ener | Water-reduc-ing agent | Extru-sion | Roll press | Flat press | Bulk density | Flex. strength $(kg/cm^2)$ | Dimen-sional change (%) | Flamma-bility test | Weather test |
|---|---|---|---|---|---|---|---|---|---|---|---|---|---|---|---|---|
| Embodi-ment | | | | | | | | | | | | | | | | |
| 1 | P.P.*1 1.6 | 100 | *4 15 | 45 | - | 40 | 0.8 | 3 | Good | Good | Good | 1.6 | 305 | 0.15 | Good | No change |
| 2 | P.P. 1.4 | 100 | *4 30 | 30 | - | 30 | 0.8 | 3 | Good | Good | Good | 1.8 | 293 | 0.18 | Good | No change |
| 3 | P.P. 1.4 | 100 | *4 30 | 30 | 2 | 30 | 0.8 | 3 | Good | Good | Good | 1.8 | 289 | 0.17 | Good | No change |
| 4 | P.P. 1.6 | 100 | *4 45 | 15 | - | 30 | 0.8 | 3 | Good | Good | Good | 1.9 | 266 | 0.20 | Good | No change |
| 5 | P.P. 1.6 | 100 | *4 45 | 15 | 2 | 30 | 0.8 | 3 | Good | Good | Good | 1.9 | 261 | 0.20 | Good | No change |
| 6 | P.V.A.*2 1.6 | 100 | *4 30 | 30 | - | 36 | 1.5 | 1.5 | Good | Good | Good | 1.8 | 290 | 0.19 | Good | No change |
| 7 | P.V.A. 1.2 | 100 | *4 10 | 10 | - | 24 | 1.0 | 0.5 | Good | Good | Good | 1.9 | 267 | 0.23 | Good | No change |
| 8 | P.V.A. 1.2 | 100 | *4 10 | 10 | 2 | 24 | 1.0 | 0.5 | Good | Good | Good | 1.9 | 260 | 0.22 | Good | No change |
| 9 | P.V.A. 2.2 | 100 | *4 60 | 60 | - | 55 | 2 | 4 | Good | Good | Good | 1.5 | 265 | 0.15 | Good | No change |

Fiber: *1 P.P. Polypropylene     Silica: *4 Quartzite powder     Non-flammability test: *7 Burst     Chloride: *9 KCl
       *2 P.V.A. Polyvinyl alcohol       *5 Silica fume                          *8 Crack generation
       *3 Asb. Asbestos              *6 Fly ash

EP 0 376 334 B1

Table 2

| | Constituent (part by weight) | | | | | | | Moldability | | | Properties of hardened composition | | | | | |
|---|---|---|---|---|---|---|---|---|---|---|---|---|---|---|---|---|
| | Fiber | Cement | Silica | Wollastonite | Water | Thickener | Water-reducing agent | Extrusion | Roll press | Flat press | Bulk density | Flex. strength (kg/cm²) | Dimensional change (%) | Flammability test | Weather test | |
| Reference Example | | | | | | | | | | | | | | | | |
| 1 | Asb. 10 | 100 | – | – | 23 | 1 | 0 | Good | Partly adheres | Partly adheres | 1.9 | 310 | 0.17 | Good | No change | Asbestos used |
| 2 | P.P. 1.6 | 100 | *5 30 | 30 | 24 | 0 | 3 | Good | Good | Insufficient pattern depth | 2.1 | 388 | 0.09 | Poor *7 | Fine cracks | Silica fume used |
| 3 | P.P. 1.8 | 100 | 10 | 70 | 56 | 1.5 | 4 | Cracks on extrusion | Poor molding | Cracks generate in patterns | 1.3 | 221 | 0.13 | – | – | Large wollastonite content |
| 4 | P.P. 1.8 | 100 | 70 | 10 | 37 | 1.0 | 4 | Good | Good | Good | 1.8 | 196 | 0.19 | Poor *8 | – | Large silica content |
| 5 | P.P. 1.6 | 100 | 30 | 30 | 38 | 1.5 | 0 | Good | Adherence occurs | Adherence occurs | – | – | – | – | – | Water reducing agent: zero |
| 6 | P.P. 1.6 | 100 | 30 | 30 | 36 | 0 | 3 | Extrusion impossible | – | – | – | – | – | – | – | Thickener: zero |
| 7 | P.P. 1.3 | 100 | 30 | 0 | 25 | 0.6 | 2 | Good | Good | Good | 2.0 | 210 | 0.30 | Poor *8 | Fine cracks | Wollastonite: zero |
| 8 | P.P. 1.3 | 100 | 0 | 30 | 28 | 0.6 | 2 | Cracks on extrusion | Poor molding | Cracks generate in patterns | 1.8 | 295 | 0.20 | Poor *8 | No change | Silica: zero |

*1 to *8 are same as used in Table 1.

## Claims

1. A non-asbestos inorganic hardened composition comprising a mixture of 100 parts by weight of cement, 5 to 60 parts by weight of quartzite powder, 5 to 60 parts by weight of wollastonite, and 0.1 to 10 parts by weight of fiber mixed with an appropriate amount of water, molded, and hardened.

2.  A non-asbestos inorganic hardened composition comprising a mixture of 100 parts by weight of cement, 5 to 60 parts by weight of quartzite powder, 5 to 60 parts by weight of wollastonite, 0.1 to 10 parts by weight of fiber and 0.2 to 8 parts by weight of an alkali metal chloride or an alkaline earth metal chloride mixed with an appropriate amount of water, molded, and hardened.

3.  The non-asbestos inorganic hardened composition as claimed in Claim 1 or Claim 2, further comprising 0.1 to 6 parts by weight of a high water reducing agent and 0.1 to 4 parts by weight of a thickener.

4.  A method for producing a non-asbestos inorganic hardened composition comprising adding an appropriate amount of water to a mixture of 100 parts by weight of cement, 5 to 60 parts by weight of quartzite powder, 5 to 60 parts by weight of wollastonite, 0.1 to 10 parts by weight of fiber, 0.1 to 6 parts by weight of a high water reducing agent, and 0.1 to 4 parts by weight of a thickener, and subjecting the mixture to an extrusion process, a roll pressing process, and a flat pressing process followed by hardening and curing.

5.  A method for producing a non-asbestos inorganic hardened composition comprising adding an appropriate amount of water to a mixture of 100 parts by weight of cement, 5 to 60 parts by weight of quartzite powder, 5 to 60 parts by weight of wollastonite, 0.1 to 10 parts by weight of fiber, 0.2 to 8 parts by weight of an alkali metal chloride or an alkaline earth metal chloride, 0.1 to 6 parts by weight of a high water reducing agent, and 0.1 to 4 parts by weight of a thickener, and subjecting the mixture to an extrusion process, a roll pressing process, and a flat pressing process followed by hardening and curing.

**Patentansprüche**

1.  Gehärtete asbestfreie anorganische Zusammensetzung, enthaltend ein Gemisch aus 100 Gew.-Teilen Zement, 5 bis 60 Gew.-Teilen pulverförmigem Quarzit, 5 bis 60 Gew.-Teilen Wollastonit und 0,1 bis 10 Gew.-Teilen Fasern, das mit einer geeigneten Menge an Wasser gemischt, verformt und gehärtet worden ist.

2.  Gehärtete asbestfreie anorganische Zusammensetzung, enthaltend ein Gemisch aus 100 Gew.-Teilen Zement, 5 bis 60 Gew.-Teilen pulverförmigem Quarzit, 5 bis 60 Gew.-Teilen Wollastonit, 0,1 bis 10 Gew.-Teilen Fasern und 0,2 bis 8 Gew.-Teilen eines Alkalimetallchlorids oder Erdalkalimetallchlorids, das mit einer geeigneten Menge Wasser gemischt, verformt und gehärtet worden ist.

3.  Gehärtete asbestfreie anorganische Zusammensetzung gemäß Anspruch 1 oder Anspruch 2, die 0,1 bis 6 Gew.-Teile eines Mittels zur Erniedrigung eines hohen Wasseranteils (Wasser-Reduktionsmittel) und 0,1 bis 4 Gew.-Teile eines Verdickungsmittels enthält.

4.  Verfahren zur Herstellung einer gehärteten asbestfreien anorganischen Zusammensetzung, welches die Zugabe einer geeigneten Wassermenge zu einem Gemisch aus 100 Gew.-Teilen Zement, 5 bis 60 Gew.-Teilen pulverförmigem Quarzit, 5 bis 60 Gew.-Teilen Wollastonit, 0,1 bis 10 Gew.-Teilen Fasern, 0,1 bis 6 Gew.-Teilen eines Mittels zum Vermindern des hohen Wassergehalts und 0,1 bis 4 Gew.-Teilen eines Verdickungsmittels, Behandeln des Gemisches mit Hilfe eines Extrusionsverfahrens, eines Walzenpreßverfahrens und eines Flachpreßverfahrens und nachfolgendes Abbinden und Härten umfaßt.

5.  Verfahren zur Herstellung einer gehärteten asbestfreien anorganischen Zusammensetzung, welches die Zugabe einer geeigneten Wassermenge zu einem Gemisch aus 100 Gew.-Teilen Zement, 5 bis 60 Gew.-Teilen pulverförmigem Quarzit, 5 bis 60 Gew.-Teilen Wollastonit, 0,1 bis 10 Gew.-Teilen Fasern, 0,2 bis 8 Gew.-Teilen eines Alkalimetallchlorids oder eines Erdalkalimetallchlorids, 0,1 bis 6 Gew.-Teilen eines Mittels zum Vermindern des hohen Wassergehalts und 0,1 bis 4 Gew.-Teilen eines Verdickungsmittels, Behandeln des Gemisches mit Hilfe eines Extrusionsverfahrens, eines Walzenpreßverfahrens und eines Flachpreßverfahrens und nachfolgendes Abbinden und Aushärten umfaßt.

**Revendications**

1. Composition minérale durcie exempte d'amiante, comprenant un mélange de 100 parties en poids de ciment, 5 à 60 parties en poids de poudre de quartzite, 5 à 60 parties en poids de wollastonite et 0,1 à 10 parties en poids de fibres, mélangé avec une quantité appropriée d'eau, moulé et durci.

2. Composition minérale durcie exempte d'amiante, comprenant un mélange de 100 parties en poids de ciment, 5 à 60 parties en poids de poudre de quartzite, 5 à 60 parties en poids de wollastonite, 0,1 à 10 parties en poids de fibres et 0,2 à 8 parties en poids d'un chlorure de métal alcalin ou d'un chlorure de métal alcalino-terreux, mélangé avec une quantité appropriée d'eau, moulé et durci.

3. Composition minérale durcie exempte d'amiante selon la revendication 1 ou la revendication 2, comprenant de plus 0,1 à 6 parties en poids d'un agent réducteur d'eau puissant et 0,1 à 4 parties en poids d'un épaississant.

4. Procédé de fabrication d'une composition minérale durcie exempte d'amiante, comprenant les étapes consistant à ajouter une quantité appropriée d'eau à un mélange de 100 parties en poids de ciment, 5 à 60 parties en poids de quartzite, 5 à 60 parties en poids de wollastonite, 0,1 à 10 parties en poids de fibres, 0,1 à 6 parties en poids d'un agent réducteur d'eau puissant et 0,1 à 4 parties en poids d'un épaississant et à soumettre le mélange à une opération d'extrusion, une opération de compression avec des rouleaux et un procédé de compression à plat suivi d'un durcissement et d'une prise.

5. Procédé de fabrication d'une composition minérale durcie exempte d'amiante, comprenant les étapes consistant à ajouter une quantité appropriée d'eau à un mélange de 100 parties en poids de ciment, 5 à 60 parties en poids de poudre de quartzite, 5 à 60 parties en poids de wollastonite, 0,1 à 10 parties en poids de fibres, 0,2 à 8 parties en poids d'un chlorure de métal alcalin ou d'un chlorure de métal alcalino-terreux, 0,1 à 6 parties en poids d'un agent réducteur d'eau puissant et 0,1 à 4 parties en poids d'un épaississant et à soumettre le mélange à une opération d'extrusion, une opération de compression avec des rouleaux et un procédé de compression à plat suivi d'un durcissement et d'une prise.

# FIG.1

201

# FIG.2

200

# FIG.3

204

201

202

30°

# FIG.4

201

202

203

EP 0 376 334 B1

# FIG.5

bulk density (vertical axis)

amounts added(wt%)

asbestos 10%

2.0

1.5

O    10    20    30    40

quartzite powder

quartzite powder /
    wollastonite =1/1

wollastonite

EP 0 376 334 B1

# FIG.6

Plot — x-axis: amounts added(wt%); y-axis: flexural strength (kg/cm²).

- asbestos 10%
- wollastonite
- quartzite powder
- wollastonite =1/1 quartzite powder

EP 0 376 334 B1

# FIG.7

dimensional stability(%)

amounts added(wt%)

0.3

0.2

0.1

0

10   20   30   40

asbestos 10%

quartzite powder

quartzite powder/
wollastonite =1/1

wollastonite

# FIG.8

EP 0 376 334 B1

FIG.9

heat shrinkage(%)

amounts added(wt%)

quartzite powder

quartzite powder +KCℓ

quartzite powder∕wollastonite =1∕1

wollastonite

wollastonite +KCℓ

quartzite powder∕wollastonite =1∕1 +KCℓ

asbestos 10%

EP 0 376 334 B1

# FIG.10

asbestos 10%

quartzite powder / wollastonite =1/1

wollastonite

$BaCl_2$

$KCl$

heat shrinkage(%)

amounts added(wt %)

# FIG.II

Cement + silica fume
80%        20%

crystalline
Cement + quartzite powder
80%        20%

temperature (°C)

time    (hour)

EP 0 376 334 B1

FIG.12

FIG.13

FIG.14

FIG.15

FIG.16

EP 0 376 334 B1